(19) Europäisches Patentamt
European Patent Office
Office européen des brevets

(11) **EP 3 647 141 B1**

(12) **EUROPÄISCHE PATENTSCHRIFT**

(45) Veröffentlichungstag und Bekanntmachung des Hinweises auf die Patenterteilung:
**10.08.2022 Patentblatt 2022/32**

(21) Anmeldenummer: **19205666.1**

(22) Anmeldetag: **28.10.2019**

(51) Internationale Patentklassifikation (IPC):
**B60W 30/09** *(2012.01)* **B60W 30/095** *(2012.01)*
**B60T 7/22** *(2006.01)* **B60T 8/1755** *(2006.01)*
**B60W 30/17** *(2020.01)*

(52) Gemeinsame Patentklassifikation (CPC):
**B60W 30/09; B60T 7/22; B60T 8/17551; B60W 30/095; B60W 30/0953; B60W 30/0956; B60W 30/17;** B60T 2201/022; B60W 2554/4041; B60W 2554/4042; B60W 2554/4045; B60W 2554/4047

(54) **VERFAHREN UND ANORDNUNG ZUM FESTLEGEN EINER SOLL-VERZÖGERUNG FÜR EIN EGOFAHRZEUG**

METHOD AND ARRANGEMENT FOR DETERMINING A TARGET DECELERATION FOR AN EGO VEHICLE

PROCÉDÉ ET DISPOSITIF DE DÉTERMINATION D'UN DÉLAI DE CONSIGNE POUR UN VÉHICULE AUTONOME

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **05.11.2018 DE 102018218844**

(43) Veröffentlichungstag der Anmeldung:
**06.05.2020 Patentblatt 2020/19**

(73) Patentinhaber: **Volkswagen AG**
**38440 Wolfsburg (DE)**

(72) Erfinder: **Duncan, Benjamin**
**13351 Berlin (DE)**

(56) Entgegenhaltungen:
DE-A1-102004 004 918 DE-A1-102006 034 411
DE-A1-102012 002 695 DE-T2- 60 116 801

**Beschreibung**

Die Erfindung betrifft ein Verfahren und eine Anordnung zum Festlegen einer Soll-Verzögerung für ein Egofahrzeug.

Unter dem Begriff Egofahrzeug wird ein aktuell betrachtetes Fahrzeug verstanden, auf das die hierin geschilderten Maßnahmen angewandt werden bzw. für das die Soll-Verzögerung bestimmt wird. Hiervon zu unterscheiden sind weitere Fahrzeuge im Umfeld des Egofahrzeugs, mit denen Kollisionen und insbesondere Auffahrunfälle vermieden werden sollen.

Es ist bekannt, Fahrer eines Egofahrzeugs und insbesondere eines Kraftfahrzeugs durch Notbremsfunktionen zu unterstützen. Diese können fahrerautonom oder zusätzlich zu einer vom Fahrer aufgebrachten Bremskraft wirken und dienen allgemein dazu, Kollisionen mit vorausliegenden Fahrzeugen zu vermeiden. Unter dem Begriff "vorausliegend" können hierin Fahrzeuge verstanden werden, die in Fahrtrichtung des Egofahrzeugs betrachtet vor diesem angeordnet sind oder in naher Zukunft voraussichtlich angeordnet sein werden. Zum Beispiel können diese Fahrzeuge in derselben Fahrtrichtung oder in eine die Fahrtrichtung des Egofahrzeugs querenden Richtung fahren. In letzterem Fall können Sie auch Orte erreichen oder bereits erreicht haben, die aus Sicht des Egofahrzeugs vorausliegen. Alternativ können die Fahrzeuge aber auch vorübergehend oder dauerhaft stehen, insbesondere an einer aus Sicht des Egofahrzeugs und in dessen Fahrtrichtung betrachtet vorausliegenden Position.

Die DE 10 2012 002 695 A1 lehrt in diesem Zusammenhang verschiedene Kriterien, um zu bewerten, ob eine Notbremsfunktion aktiviert werden soll. Ferner werden erforderliche Bedarfsverzögerungen ermittelt (auch Vermeidungsbeschleunigungen genannt), beispielsweise basierend auf der Annahme, dass für eine Kollisionsvermeidung eine Relativgeschwindigkeit eines Egofahrzeugs und eines vorausliegenden Fahrzeugs zu null werden muss.

Ferner ist es aus der Fachliteratur bekannt, je nach der aktuellen Fahrsituation unterschiedliche Vermeidungsbeschleunigungen zu verwenden. Konkret wird unterschieden zwischen dem Fall eines vorausliegenden konstant verzögernden Hindernisses und einen in den (Still-) Stand bremsendes Hindernisses. Bildlich gesprochen soll unterschieden werden, ob das vorausliegende Fahrzeug vom Egofahrzeug voraussichtlich getroffen werden würde, wenn dieses noch fährt oder wenn dieses sich bereits im Stillstand befindet. Hierfür können in an sich bekannter Weise Bewegungsgrößen des Egofahrzeugs ermittelt werden, beispielsweise mittels eigener Geschwindigkeitssensoren, und auch Bewegungsgrößen des vorausliegenden Fahrzeugs, beispielsweise mittels Umfeld- und insbesondere Abstandssensoren. Je nach dem vermuteten Szenario werden dann unterschiedliche Soll-Verzögerungen ausgewählt und zum Beispiel mittels eines fahrerunabhängig betätigbaren Bremsaktors umgesetzt, wobei die Soll-Verzögerungen derart gestaltet sind, dass sich das vermutete Kollisionsszenario voraussichtlich vermeiden lässt.

Dabei ist darauf hinzuweisen, dass die Soll-Verzögerungen auch Anforderungen an die Fahrsicherheit und insbesondere -stabilität erfüllen und sich somit von einem direkten Aktivieren einer maximalen Bremskraft unterscheiden, was allgemein unerwünscht ist. Weiter wird eine Differenzierung nach den vermuteten Kollisionsszenarien deshalb getroffen, da bei dem in den Stillstand bremsenden Fahrzeug dieses bereits selbst eine vergleichsweise hohe Verzögerung aufbringt und somit eine eigene Abbremsung u.U. weniger stark ausfallen kann.

Um zu ermitteln, welches der Kollisionsszenarien voraussichtlich vorliegt, wird die in der obigen Fachliteratur diskutierte sogenannte eTTC (enhanced Time To Collision) ermittelt. Diese Größe berücksichtigt die Beschleunigung bzw. Verzögerung des vorausliegenden Fahrzeugs.

Mit der eTTC kann geprüft werden, ob das vorausliegende Fahrzeug den Stillstand erreicht, bevor es vom Egofahrzeug getroffen wird. Genauer gesagt kann abgeschätzt werden, wie lang das vorausliegenden Fahrzeug für eine Abbremsung in den Stillstand benötigen würde und wenn der entsprechende Zeitwert größer als die eTTC ist, würde es in einem noch fahrenden und wenn der Zeitwert kleiner als die eTTC ist in einem stehenden Zustand getroffen werden. Je nach dem ermittelten Kollisionsszenario werden dann Soll-Verzögerungen ausgewählt, die anhand vorab hinterlegter und Kollisionsszenario-spezifischer Formeln bestimmt werden.

Als problematisch hat sich jedoch herausgestellt, dass bei dem bisherigen Ansatz von vornherein abgeschätzt werden muss, welches der Kollisionsszenarien relevant ist (voraussichtliche Kollision mit fahrendem oder mit stehendem Fahrzeug). Beispielsweise kann der Fall auftreten, dass zunächst von einem dieser Szenarien ausgegangen und die dazugehörige Soll-Verzögerung ausgewählt wird, diese Auswahl sich aber aufgrund der während des Bremsvorgangs einstellenden Bewegungsverhältnisse als unzutreffend herausstellt und somit auf eine andere Soll-Verzögerung gewechselt werden muss. Ein derartiger Sprung zwischen den Soll-Verzögerungen ist aus Fahrersicht unerwünscht und stellt auch ein Sicherheitsrisiko dar, insbesondere wenn zunächst eine Soll-Verzögerung gewählt wurde, die in einer zu geringen Abbremsung resultiert. Auch der gegenteilige Fall ist denkbar, bei dem eine unnötig hohe Verzögerung eingestellt wird und hierdurch zum Beispiel ein Kollisionsrisiko mit nachfahrendem Verkehr erhöht oder das eigentlich nicht erforderliche Auslösen von Notbremsfunktionen hervorgerufen wird.

Es besteht somit eine Bedarf dafür, das Einstellen einer Notbremsfunktion für ein Fahrzeug zu verbessern.

Die DE 601 16 801 T2 offenbart eine Fahrzeugkollisionsverhinderungseinrichtung, mit der zu zweckmäßigen Zeitpunkten Warnungen abgegeben oder Bremskräfte erzeugt werden sollen, um einen geeigneten Fahrzeugabstand zwischen einem nachfahrenden und vorausfahrenden Fahrzeug einzuhalten.

Die DE 10 2006 034 411 A1 offenbart eine Geschwindigkeits- und Anhalteregelung in Kraftfahrzeugen, wobei ein Fahrzeug in den Stand gebremst wird, wenn erkannt wird, dass ein Vorderfahrzeug anhält und wofür ein Anhalteregler in Form eines Rollphasenreglers eingesetzt wird.

Die DE 10 2004 004 918 A1 offenbart eine Lösung zur Kollisionswarnung bei einem Kraftfahrzeug, bei der ermittelt wird, ob ein ACC-System (Adaptive Cruise Control) in der Lage ist, eine zur Wahrung eines Restabstandes zu einem vorausfahrenden Fahrzeug einzuhaltende Verzögerung zu realisieren.

Diese Aufgabe wird durch ein Verfahren mit den Merkmalen des beigefügten Anspruchs 1, eine Anordnung mit den Merkmalen des beigefügten Anspruchs 6 und ein Fahrzeug mit den Merkmalen des beigefügten Anspruchs 7 gelöst.

Ein Grundgedanke der Erfindung besteht darin, eine verbesserte Auswahlmöglichkeit für die umzusetzende Soll-Verzögerung bereitzustellen. Hiermit können spätere Wechsel zwischen unterschiedlichen vorbestimmten Soll-Verzögerungen weniger wahrscheinlich oder gänzlich vermieden werden. Dies verbessert die Sicherheit und aus Sicht des Fahrers auch das Fahr- bzw. Bremsverhalten des Fahrzeugs.

Genauer gesagt schlägt die Erfindung vor, Bewegungsgrößen eines vorausliegenden Fahrzeugs zu ermitteln und daraus eine Bremszeit und Bremsdistanz zu bestimmen, die benötigt werden würde, um zum Stillstand zu gelangen. Es versteht sich, dass aus der Bremsdistanz auch die Position (Stillstandsposition) bestimmt werden kann, an der das vorausliegende Fahrzeug zum Stillstand kommen würde. Darauf basierend kann dann die Bremszeit für das Egofahrzeug bestimmt werden, die dieses benötigt, um spätestens an derselben Position zum Stehen zu kommen. Hierdurch ließe sich eine Kollision voraussichtlich vermeiden. Dies ist auf eine mathematische Annahme zurückzuführen, wonach die Fahrzeuge als Punkte betrachtet werden. Zudem kann das Kollisionsrisiko durch anschließendes Vorsehen von Toleranz- bzw. Pufferfaktoren weiter gesenkt werden.

Anschließend werden erfindungsgemäß die ermittelten Bremszeiten in ein Verhältnis zueinander gesetzt und es wird überprüft, ob die Bremszeit des Egofahrzeugs zum Anhalten an der Stillstandsposition geringer als diejenige des vorausliegenden Fahrzeugs ist.

Ist dies der Fall, würde das Egofahrzeug das vorausliegende Fahrzeug voraussichtlich treffen, wenn dieses noch fährt und eine für dieses Szenario vorbestimmter Soll-Verzögerung kann ausgewählt werden. Ist hingegen die Bremszeit des Egofahrzeugs zum Anhalten an der Stillstandsposition größer als diejenige des vorausliegenden Fahrzeugs, würde das vorausliegende Fahrzeug die Stillstandposition vor dem vorausliegenden Fahrzeug erreichen. Vorzugsweise würde dann eine andere vorbestimmte Soll-Verzögerung ausgewählt werden. Ein Unterschied zu dem bisherigen Ansatz ist insbesondere darin zu sehen, dass von einer tatsächlichen Bremsung des Egofahrzeugs ausgegangen sowie das mögliche Erreichen eines die Kollision vermeidenden Zustands betrachtet wird (Stillstandsposition). Es kann daher auch von Vermeidungszeitpunkten und Vermeidungsbremsdistanzen gesprochen werden, die erfindungsgemäß betrachtet werden.

Basierend auf derartigen Überlegungen kann von vornherein, d. h. zu Beginn eines assistierten oder autonomen Notbremsvorgangs, eine geeignete Soll-Verzögerung gewählt werden. Es hat sich gezeigt, dass die vorgeschlagene anhand eines Verhältnisses der Bremszeiten durchgeführte Auswahl der Soll-Verzögerung zutreffender als mit den bisherigen Ansätzen gelingt und insbesondere, dass ein Wechsel zwischen verschiedenen Soll-Verzögerungen im Laufe des Bremsvorgangs weniger wahrscheinlich ist oder auch gänzlich vermieden werden kann.

Im Detail wird ein Verfahren zum Festlegen einer Soll-Verzögerung für ein Egofahrzeug gemäß Anspruch 1 vorgeschlagen.

Bei der Bewegungsgröße kann es sich um eine Positionsinformation (z.B. betreffend eine absolute Position oder ein Relativabstand bzw. eine Relativposition zum Egofahrzeug) handeln. Unter dem Ermitteln der Bewegungsgröße kann insbesondere ein Messen verstanden werden. Aus der Positionsinformation bzw. deren zeitlicher Änderung können dann auch weitere Bewegungsgrößen wie eine Geschwindigkeit oder eine Beschleunigung des vorausliegenden Fahrzeugs berechnet werden. Diese Geschwindigkeit und/oder Beschleunigung können aber auch messtechnisch erfasst werden. Vorzugsweise werden sämtliche oder zumindest zwei dieser Bewegungsgrößen (Positionsinformation, Geschwindigkeit, Beschleunigung) ermittelt und insbesondere gemessen.

Zusammengefasst kann jegliche Bewegungsgröße messtechnisch oder, anders ausgedrückt, basierend auf einer sensorischen Erfassung der Bewegung des vorausliegenden Fahrzeugs ermittelt werden. Gemäß einer bevorzugten Variante wird zumindest eine vorstehend erläuterte Positionsinformation messtechnisch erfasst und werden daraus weitere Bewegungsgrößen (z.B. die Geschwindigkeit und/oder Beschleunigung) berechnet.

Hierfür kann das Egofahrzeug (bzw. dessen nachfolgend erläuterte Anordnung) Umfeldsensoren umfassen, welche eine Bewegung des vorausliegenden Fahrzeugs erfassen. Hierbei kann es sich zum Beispiel um Abstandssensoren handeln und/oder um einen Radar-, Lidar- oder Ultraschallsensor. Es versteht sich, dass aus einer (messtechnisch) erfassten Bewegungsgröße auch weitere Bewegungsgrößen ermittelt und insbesondere berechnet werden können. Insbesondere kann eine Beschleunigung aus einer messtechnisch erfassten Geschwindigkeit und/oder (Relativ-) Position berechnet werden.

Im Rahmen der vorliegenden Offenbarung können unter eine Beschleunigung auch Verzögerungen fallen, welche negative Beschleunigungen sind und einem Abbremsen des entsprechenden Fahrzeugs entsprechen.

Die Bremszeit kann durch Bilden eines Quotients aus einer ermittelten Geschwindigkeit des vorausliegenden Fahrzeugs und dessen Verzögerung (insbesondere dessen absoluter Verzögerung $a_{AbsObj}$, vorzugsweise multipliziert mit -1) ermittelt werden. Als Beispiel wird auf die folgende Gleichung (1) verwiesen, bei der die Bremszeit des vorausliegenden Fahrzeugs als Object_Time_to Stillstand angegeben und $v_{Obj}$ die Geschwindigkeit des Fahrzeugs ist:

$$Object\_Time\_To\_Stillstand = \frac{v_{obj}}{-a_{AbsObj}} \quad (1).$$

Die Bremsdistanz (Object_Distance_to Stillstand) kann durch Bilden des Quotients von dem Quadrat der ermittelten Geschwindigkeit des vorausliegenden Fahrzeugs und dessen mit zwei multiplizierter Beschleunigung gebildet werden. Als Beispiel wird auf die folgende Gleichung (2) verwiesen, in der die Variablen wie vorstehend definiert sind:

$$Object\_Distance\_To\_Stillstand = -\frac{v_{Obj}^2}{2a_{AbsObj}} \quad (2).$$

Um die Bremszeit das Egofahrzeugs zu ermitteln, damit dieses an spätestens derselben Position zum Stillstand wie das vorausliegende Fahrzeug kommt, kann zunächst die Bremsdistanz des Egofahrzeugs (Ego_Distance_to_Stillstand) bis zu eben dieser Position ermittelt werden. Diese setzt sich aus der relativen Distanz (dx_rel) zum vorausliegenden Fahrzeug und der Bremsdistanz des vorausliegenden Fahrzeugs (Object_Distance_to Stillstand) zusammen, siehe beispielsweise die nachstehende Gleichung (3):

$$Ego\_Distance\_to\_Stillstand = Object\_Distance\_to\ Stillstand + dx\_rel \quad (3).$$

Mit dieser Gleichung wird zum Ausdruck gebracht, dass eine Kollision dann als vermeidbar angesehen wird, wenn das Egofahrzeug an der gleichen Position zum Stillstand kommt, wie das vorausliegende Fahrzeug. Hierbei können auch Sicherheitspuffer berücksichtigt werden, beispielsweise wenn anzunehmen ist, dass aufgrund des Fahrerverhaltens oder systembedingt nicht sofort eine maximale Bremskraft anliegt. In diesem Fall kann zum Beispiel in Gleichung (3) eine negative Distanz berücksichtigt werden, innerhalb derer angenommen wird, das noch keine ausreichende Bremskraft und insbesondere noch keine maximale Bremskraft anliegt. Beispielsweise könnte der Relativabstand dx_rel um eine entsprechende Distanz verringert werden.

Ist die Bremsdistanz des Egofahrzeugs bekannt, kann hieraus auch dessen Bremszeit bis zum Erreichen der vorstehend geschilderten Position bestimmt werden, und zwar durch Bilden des Quotients aus der (vorzugsweise doppelten) Bremsdistanz des Egofahrzeugs und der Geschwindigkeit des Egofahrzeugs:

$$Ego\_Time\_To\_Stillstand = \frac{2 \cdot Ego\_Distance\_Travel\_To\_Stillstand}{v_{Ego}} \quad (4).$$

Bei der Sollverzögerung kann es sich um eine Größe handeln, die als oder zum Erzeugen einer Steuergröße für einen Bremsaktor verwendet wird. Der Bremsaktor kann zur Umsetzung der Verzögerung eingerichtet und beispielsweise als eine fahrerunabhängig betätigbare Bremsdruckerzeugungseinrichtung ausgebildet sein.

Bei dem Verhältnis der Bremszeiten kann es sich um einen Quotienten, eine Differenz oder einen allgemeinen Vergleich und insbesondere einen größer/kleiner-Vergleich der Bremszeiten handeln.

Erfindungsgemäß wird dann, wenn die Bremszeit des vorausliegenden Fahrzeugs größer als diejenige des Egofahrzeugs ist, eine erste (vorzugsweise vorbestimmte) Soll-Verzögerung ausgewählt. Diese kann sich von einer nachstehend erläuterten zweiten (vorzugsweise vorbestimmten) Soll-Verzögerung unterscheiden. Insbesondere kann vorgesehen sein, dass wenigstens eine erste und eine zweite Soll-Verzögerung als vorbestimmte Soll-Verzögerungen hinterlegt sind und je nach dem aktuellen Verhältnissen zwischen diesen ausgewählt wird.

Allgemein kann eine Soll-Verzögerung eine Formel und/oder Regel für die Verzögerung definieren und insbesondere eine Soll-Verzögerungsfunktion angeben. Somit kann auch vorgesehen sein, eine Soll-Verzögerung im Sinne einer zu verwendenden Soll-Verzögerungsfunktion auszuwählen und in diese dann aktuelle Werte insbesondere bezüglich der oben aufgelisteten Bewegungsgrößen einzusetzen.

Der Schritt des Festlegens einer Soll-Verzögerung kann somit insbesondere das Auswählen bzw. Festlegen einer zu verwendenden Soll-Verzögerungsfunktion betreffen und vorzugsweise auch das Einsetzen von Werten darin (zum Beispiel Werte für die oben angeführten Bewegungsgrößen), um einen anzuwendenden Soll-Verzögerungswert oder -werteverlauf zu bestimmen.

Ferner kann vorgesehen sein, dass sich die erste Soll-Verzögerung auf ein Kollisionsszenario zwischen dem Egofahrzeug und einem noch fahrenden vorausliegenden Fahrzeug bezieht. Insbesondere kann die Soll-Verzögerung derart gewählt werden, dass eine Kollision mit dem Fahrzeug basierend auf der Annahme vermeidbar ist, dass dieses (ohne vorgenommene Verzögerungen bzw. unter Beibehaltung der aktuellen Bewegungsgrößen) sich im Kollisionsfall noch bewegen würde. Beim Festlegen der Soll-Verzögerung kann somit insbesondere berücksichtigt werden, dass eine gewisse (aktive) Bewegung des vorausliegenden Fahrzeugs relativ zum Egofahrzeug vorliegt und/oder aufrechterhalten wird.

Insbesondere kann in diesem Zusammenhang die erste Soll-Verzögerung wie folgt gewählt werden:

$$D_{\mathrm{req,D}} = D_{\mathrm{obs}} + \frac{v_{\mathrm{diff}}^2}{2d} \quad (5),$$

wobei $D_{\mathrm{req,D}}$ die einzustellende Soll-Verzögerung, $D_{\mathrm{obs}}$ die absolute Verzögerung des vorausliegenden Fahrzeugs, $v_{\mathrm{diff}}$ die Differenzgeschwindigkeit zwischen dem Egofahrzeug und dem vorausliegenden Fahrzeug und d der Abstand zwischen dem Egofahrzeug in dem vorausliegenden Fahrzeug ist.

Erfindungsgemäß wird dann, wenn die Bremszeit des vorausliegenden Fahrzeugs kleiner als diejenige des Egofahrzeugs ist, eine zweite Soll-Verzögerung ausgewählt. In diesem Fall wäre davon auszugehen, dass das vorausliegende Fahrzeug schneller als das Egofahrzeug zum Stillstand kommt und somit die Stillstandsposition (also die Position, die mit einer Kollisionsvermeidung einhergehen würde) vor dem Egofahrzeug erreicht. In diesem Zusammenhang kann deshalb ferner vorgesehen sein, dass sich die zweite Soll-Verzögerung auf ein Kollisionsszenario zwischen dem Egofahrzeug und einem stillstehenden vorausliegenden Fahrzeug bezieht.

Insbesondere kann hierbei als zweite Soll-Verzögerung folgendes gewählt werden:

$$D_{\mathrm{req,stop}} = \frac{v_{\mathrm{sub}}^2}{2\left(d + \frac{v_{\mathrm{obs}}^2}{2D_{\mathrm{obs}}}\right)} \quad (6),$$

wobei $D_{\mathrm{req,stop}}$ die einzustellende Soll-Verzögerung, $v_{\mathrm{sub}}$ die Geschwindigkeit des Egofahrzeugs, $v_{\mathrm{obs}}$ die Geschwindigkeit des vorausliegenden Fahrzeugs und d der Abstand zwischen dem Egofahrzeug und dem vorausliegenden Fahrzeug ist.

Die Erfindung betrifft ferner eine Anordnung zum Festlegen einer Soll-Verzögerung für ein Egofahrzeug gemäß dem unabhängigen Anspruch 6.

Die Anordnung kann allgemein jegliches weitere Merkmal und jegliche weitere Funktion umfassen, um sämtliche der vorstehend und nachstehend erläuterten Effekte, Wechselwirkungen und Betriebszustände bereitzustellen. Insbesondere kann die Anordnung jegliche im Zusammenhang mit dem Verfahren erläuterte Merkmale ebenfalls umfassen. Jegliche im Zusammenhang mit dem Verfahren erläuterte Weiterbildungen können ebenso auf die analogen Anordnungsmerkmale zutreffen. Weiter kann allgemein vorgesehen sein, dass die Anordnung eingerichtet ist, ein Verfahren gemäß jeglichen der vorstehenden und nachstehenden Aspekte auszuführen.

Im Folgenden werden Ausführungsformen der Erfindung anhand der beigefügten schematischen Figuren erläutert. Gleichartige oder gleichwirkende Merkmale können dabei mit den gleichen Bezugszeichen versehen sein. Es stellen dar:

Fig. 1    eine Darstellung einer erfindungsgemäßen Anordnung gemäß einer ersten Ausführungsform, die ein erfindungsgemäßes Verfahren ausführt;

Fig. 2    eine Darstellung eines schematischen Ablaufs eines von der Anordnung aus Figur 1 ausgeführten Verfahrens;

Fig. 3    ein mit der Anordnung aus Figur 1 erzielbarer Verzögerungsverlauf; und

Fig. 4    ein gemäß dem Stand der Technik erzielbarer Verzögerungsverlauf.

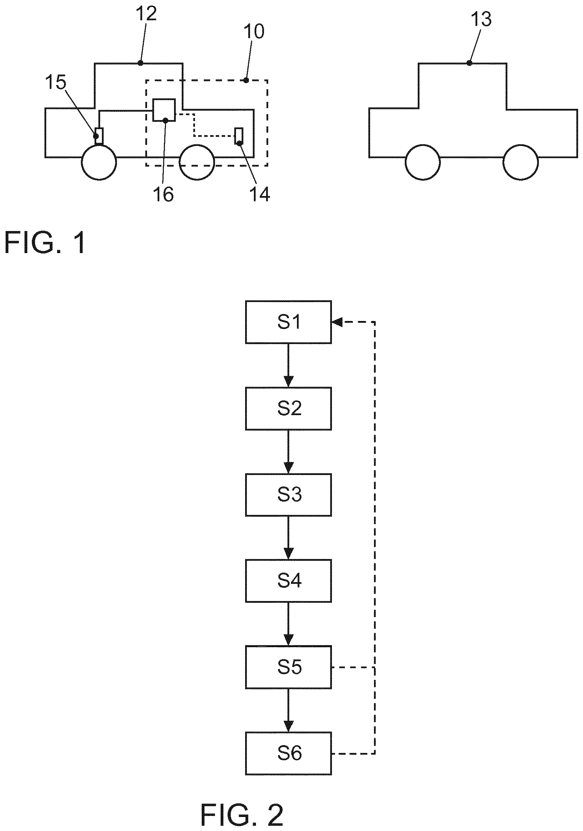

In Fig. 1 ist eine erfindungsgemäßen Anordnung 10 gemäß einer ersten Ausführungsform schematisch dargestellt, die ein erfindungsgemäßes Verfahren ausführt. Die Anordnung 10 ist von einem schematisch angedeuteten Fahrzeug (Egofahrzeug) 12 umfasst. Eine Fahrtrichtung des Fahrzeugs 12 verläuft in Figur 1 von links nach rechts.

Das Egofahrzeug 12 umfasst mehrere Bewegungsgrößenermittlungseinrichtungen 14 in Form von Umfeldsensoren, von denen lediglich einer schematisch angedeutet ist. Hierbei kann es sich zum Beispiel um einen Radar-Abstandssensor handeln, wobei aus den (zeitlichen) Änderungen hiervon gemessener Abstandswerte zu einem vorausliegenden Fahrzeug 13 auch weitere Bewegungsgrößen des vorausliegenden Fahrzeugs 13 bestimmbar sind, insbesondere dessen Geschwindigkeit und Beschleunigung.

Weiter umfasst das Egofahrzeug 12 eine Soll-Verzögerungs-Festlegeeinrichtung 16. Diese ist als ein Steuergerät des Egofahrzeugs 12 ausgebildet oder in ein bereits bestehendes Steuergerät integriert. In dem gezeigten Beispiel empfängt die Soll-Verzögerungs-Festlegeeinrichtung 16 von der Bewegungsgrößenermittlungseinrichtung 14 ermittelte Signale bezüglich der Bewegungsgrößen des vorausliegenden Fahrzeugs 13. Weiter ist die Soll-Verzögerungs-Festlegeeinrichtung 16 mit einem nicht gesondert dargestellten Bremsaktor verbunden, der dazu eingerichtet ist, das Fahrzeug 12 nach Maßgabe durch die Soll-Verzögerungs-Festlegeeinrichtung 16 erzeugten Steuersignalen zu verzögern. Die Soll-Verzögerungs-Festlegeeinrichtung 16 erhält zudem Signale bezüglich der Bewegungsgrößen des Egofahrzeugs 12, beispielsweise von einem herkömmlichen Geschwindigkeitssensor 15, der zum Beispiel ein ABS-Raddrehzahlsensor sein kann.

In Figur 2 ist ein Ablauf eines erfindungsgemäßen Verfahrens gezeigt, das mit der Anordnung 10 aus Figur 1 umsetzbar ist. In einem Schritt S1 werden von der Soll-Verzögerungs-Festlegeeinrichtung 16 als Bewegungsgrößen ein Abstand (d. h. eine Positionsinformationen, insbesondere relativ zum Egofahrzeug 12) eine Geschwindigkeit und eine Beschleunigung des vorausliegenden Fahrzeugs 13 ermittelt. Beispielsweise können Werte dieser Größe von den Umfeldsensoren des Fahrzeugs 13 empfangen werden. Zu diesem Zeitpunkt wurde gemäß herkömmlicher und zum Beispiel in dem vorstehend zitierten Fachbuch geschilderter Ansätze bereits ermittelt, dass eine Soll-Verzögerung eingestellt werden sollte. In an sich bekannter Weise kann die Soll-Verzögerung aber auch fortlaufend ermittelt werden, beispielsweise um als Maßstab für die Kritikalität einer aktuellen Fahrsituation zu dienen, unabhängig davon, ob Bremsassistenz- oder sogar Notbremsfunktionen tatsächlich aktiviert werden. Beginnend mit Schritt S1 soll mit dem erfindungsgemäßen Verfahren festgelegt werden, welche Soll-Verzögerung einzustellen ist.

In einem Schritt S2 wird mittels der ermittelten Bewegungsgrößen und der vorstehenden Gleichung (1) die Bremszeit des vorausliegenden Fahrzeugs 13 ermittelt. Hierzu wird die vorstehenden Gleichung (1) verwendet.

In einem Schritt S3 wird mittels der ermittelten Bewegungsgrößen und der vorstehenden Gleichung (2) die Bremsdistanz des vorausliegenden Fahrzeugs 13 ermittelt. Hierzu wird die vorstehenden Gleichung (2) verwendet.

In einem Schritt S4 wird mittels des Relativabstandes zwischen den Fahrzeugen 12, 13, der ermittelten Bremsdistanz des vorausliegenden Fahrzeugs 13 und der vorstehenden Gleichung (3) die Bremsdistanz des Egofahrzeugs 12 ermittelt.

Anschließend wird im Schritt S5 basierend auf der Geschwindigkeit des Egofahrzeugs 12 und des Ergebnisses von Schritt S4 die Bremszeit des Egofahrzeugs 12 bestimmt.

Nach einem solchen Durchführen von Schritt S5 liegen somit sowohl die Bremszeit des vorausliegenden Fahrzeugs 13 als auch die Bremszeit des Egofahrzeugs 12 vor, wobei letztere diejenige Bremszeit betrifft, die das Egofahrzeug 12 benötigen würde, um in derselben Position wie das vorausliegende Fahrzeug 13 zum Stillstand zu kommen und hierdurch eine Kollision zu voraussichtlich vermeiden.

Darauf basierend wird erfindungsgemäß dann ein Vergleich der jeweiligen Bremszeiten in dem Schritt S6 durchgeführt werden. Genauer gesagt wird ermittelt, welche der Bremszeiten größer ist.

Ist die Bremszeit zum Erreichen der Stillstands- d. h. Kollisionsvermeidungs-Position des vorausliegenden Fahrzeugs 13 größer (d. h. diejenige des Egofahrzeugs 12 kleiner), würde dieses (zum Beispiel basierend auf einer Extrapolation der erfassten aktuellen Bewegungsgrößen) von dem Egofahrzeug 12 getroffen werden, bevor es die Stillstandsposition erreicht. Entsprechend würde als Soll-Verzögerung des Egofahrzeugs 12 eine Verzögerung gemäß obiger Gleichung (5) gewählt werden. Dabei ist zu beachten, dass gemäß vorigen Überlegungen als Grundlage der Soll-Verzögerungsauswahl Bremszeiten betrachtet werden, die zum Erreichen der kollisonsvermeidenden Stillstandsposition benötigt werden. Bildlich gesprochen wird also ein Zeitpunkt bzw. eine Position der Kollisionsvermeidung zu Grunde gelegt und nicht der etwaigen Kollision selbst, wie mit bisherigen Ansätzen der Fall.

Ist die Bremszeit des vorausliegenden Fahrzeugs 13 kleiner (d. h. diejenige des Egofahrzeugs 12 größer), würde dieses (basierend auf einer Extrapolation der erfassten aktuellen Bewegungsgrößen) die Stillstandsposition vor dem Egofahrzeug 12 erreichen. Entsprechend würde als Soll-Verzögerung des Egofahrzeugs 12 eine Verzögerung gemäß obiger Gleichung (6) gewählt werden.

Die entsprechende Wahl der Soll-Verzögerung gemäß Schritt S6 erfolgt zu einem frühestmöglichen Zeitpunkt. Es kann allerdings vorgesehen sein, wie auch im Stand der Technik üblich, während des bereits durchgeführten Notbremsvorgangs zum Schritt S1 zurückzukehren und die Wahl der Soll-Verzögerung anhand kontinuierlich aktualisierter Bewegungsgrößen zu überprüfen (siehe strichlierter Pfeil in Figur 2).

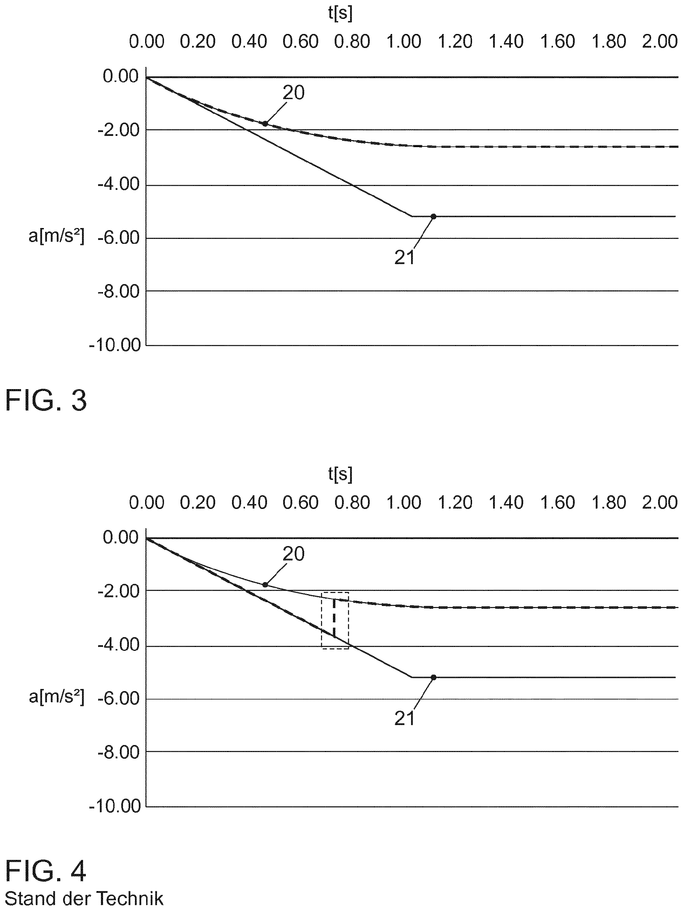

Wird jedoch aus dem erzielbaren Verzögerungsverläufen der Figur 3 ersichtlich, wird mit dem erfindungsgemäßen Auswahlkriterium für die Soll-Verzögerung ermöglicht, dass eine einmal eingestellte Soll-Verzögerung während des Bremsvorgangs beibehalten wird und sich somit ein stetiger Verzögerungsverlauf über die Zeit ergibt.

Genauer gesagt betrifft die obere Kurve 20 in Figur 3 die Verzögerung basierend auf der Gleichung (5) (d. h. den Fall, dass das Egofahrzeug 12 die Stillstandsposition vor dem vorausliegenden Fahrzeug 13 erreicht), während die untere Kurve 21 die Verzögerung basierend auf der Gleichung (6) betrifft (d. h. den Fall, dass das Egofahrzeug 12 die Stillstandsposition nach dem vorausliegenden Fahrzeug 13 erreicht). Für die Wahl der Soll-Verzögerung (d. h. ob Gleichung (5) der Gleichung (6) gewählt werden soll) basierend auf dem erfindungsgemäßen Vergleich der Stillstandspositions-bezogenen Bremszeiten hat es sich gezeigt, dass auch bei einer kontinuierlich wiederholten Überprüfung hinsichtlich der zu wählenden Soll-Verzögerung keine Wechsel zwischen den Kurven 20, 21 auftreten, sondern eine einmal begonnene Abbremsung gemäß einer dieser Kurven 20, 21 aufrechterhalten wird.

Dies verdeutlicht sich durch den tatsächlich ausgeführten Verzögerungsverlauf in Figur 3, der als strichlierte Linie dargestellt ist, und kontinuierlich entlang nur einer der Kurven 20, 21 verläuft. Als Grund ist hier das Betrachten von Kollisionsvermeidungszeitpunkten durch Bestimmen der kollisionsvermeidenden Stillstandsposition als Ausgangspunkt zu nennen.

Im Vergleich hierzu zeigt Figur 4 die sich einstellenden Verzögerungsverläufe gemäß dem Stand der Technik. Auch in diesem Fall sind strichliert angedeutete obere und untere Kurven 20, 21 analog zu Figur 3 vorhanden. Ein tatsächlich ausgeführter Verzögerungsverlauf ist als strichlierte Linie dargestellt. Man erkennt, dass zunächst eine Verzögerung entlang der unteren Kurve 21 ausgeführt wird, nach ca. 0,7 Sekunde jedoch auf die obere Kurve 20 gewechselt wird. Grund ist, dass der fortlaufend durchgeführte Vergleich der fortlaufend ermittelten und einleitend diskutierten eTTC und der ebenfalls fortlaufend ermittelten Verzögerung des vorausliegenden Fahrzeugs auf ein anderes Kollisionsszenario ab diesem Zeitpunkt schließen lässt. Dies äußert sich als ein Sprung zwischen den Kurven 20, 21 und allgemein als ein unstetiger Verzögerungsverlauf.

Dies kann aus Sicht des Fahrers unerwartet sein und allgemein ein Sicherheitsrisiko darstellen, insbesondere wenn zunächst zu schwach oder zu stark abgebremst wurde. In letzterem Fall wären der nachfahrende Verkehr gefährdet oder eine Notbremsfunktion könnte ausgelöst werden, ohne dass dies eigentlich erforderlich ist. Wie gezeigt, kann ein solches Verhalten jedoch durch die erfindungsgemäß vorgeschlagene Lösung vermieden werden.

**Bezugszeichenliste**

| | |
|---|---|
| Object_Time_to Stillstand | Bremszeit vorausliegendes Fahrzeug |
| $v_{Obj}$ | Geschwindigkeit des vorausliegenden Fahrzeugs |
| $a_{AbsObj}$ | Betrag der Beschleunigung des vorausliegenden Fahrzeugs |
| Object_Distance_to Stillstand | Bremsdistanz vorausliegendes Fahrzeug |
| dx_rel | Relativabstand |
| Ego_Distance_to Stillstand | Bremsdistanz Egofahrzeug |
| Ego_Time_to Stillstand | Bremszeit Egofahrzeug |
| $D_{req,D}$ | einzustellende Soll-Verzögerung (anzunehmende Kollision mit fahrenden Fahrzeug), |
| $D_{obs}$ | absolute Verzögerung des vorausliegenden Fahrzeugs, |
| $V_{diff}$ | Differenzgeschwindigkeit zwischen dem Egofahrzeug und dem vorausliegenden Fahrzeug, |
| d | Abstand zwischen dem Egofahrzeug und dem vorausliegenden Fahrzeug, |
| $D_{req,stop}$ | einzustellende Soll-Verzögerung (anzunehmende Kollision mit fahrenden Fahrzeug), |
| $v_{sub}$ | Geschwindigkeit des Egofahrzeugs, |
| $v_{obs}$ | Geschwindigkeit des vorausliegenden Fahrzeugs, |
| 10 | Anordnung, |
| 12 | Fahrzeug, |
| 13 | vorausliegendes Fahrzeug, |
| 14 | Bewegungsgrößenermittlungseinrichtung, |
| 15 | Geschwindigkeitssensor, |
| 16 | Soll-Verzögerungs-Festlegeeinrichtung. |

**Patentansprüche**

**1.** Verfahren zum Festlegen einer Soll-Verzögerung für ein Egofahrzeug (12), wobei das Verfahren aufweist:

- Ermitteln wenigstes einer Bewegungsgröße eines vorausliegenden Fahrzeugs (13);

- Ermitteln einer Bremszeit (Object_Time_to Stillstand) und einer Bremsdistanz (Object_Distance_to Stillstand) basierend auf der Bewegungsgröße, die das vorausliegende Fahrzeug (13) jeweils benötigen würde, um zum Stillstand zu kommen;
- Ermitteln einer Bremszeit (Ego_Time_to Stillstand) für das Egofahrzeug (12), die benötigt werden würde, um an spätestens derselben Position zum Stillstand zu kommen wie das vorausliegende Fahrzeug (13), wenn dieses die Bremsdistanz (Object_Distance_to Stillstand) zurückgelegt hat;
- Ermitteln eines Verhältnisses der Bremszeiten (Object_Time_to Stillstand, Ego_Time_to Stillstand) des vorausliegenden Fahrzeugs (13) und des Egofahrzeugs (12);
- Festlegen einer Soll-Verzögerung ($D_{req,stop}$) für das Egofahrzeug (12) basierend auf dem ermittelten Verhältnis der Bremszeiten (Object_Time_to Stillstand, Ego_Time_to Stillstand);

wobei dann, wenn die Bremszeit (Object_Time_to Stillstand) des vorausliegenden Fahrzeugs (13) größer als diejenige des Egofahrzeugs (12) ist, eine erste Soll-Verzögerung ($D_{req.D}$) ausgewählt wird, und
wobei dann, wenn die Bremszeit (Ego_Time_to Stillstand) des vorausliegenden Fahrzeugs (13) kleiner als diejenige des Egofahrzeugs (12) ist, eine zweite Soll-Verzögerung ($D_{req,stop}$) ausgewählt wird.

2. Verfahren nach Anspruch 1,
wobei sich die erste Soll-Verzögerung ($D_{req,D}$) auf ein Kollisionsszenario zwischen dem Egofahrzeug (12) und einem noch fahrenden vorausliegenden Fahrzeug (13) bezieht.

3. Verfahren nach Anspruch 1 oder 2,
wobei als erste Soll-Verzögerung folgendes gewählt wird:

$$D_{\mathrm{req,D}} = D_{\mathrm{obs}} + \frac{v_{\mathrm{diff}}^2}{2d},$$

wobei $D_{req,D}$ die einzustellende Soll-Verzögerung, $D_{obs}$ die absolute Verzögerung des vorausliegenden Fahrzeugs (13), $V_{diff}$ die Differenzgeschwindigkeit zwischen dem Egofahrzeug (12) und dem vorausliegenden Fahrzeug (13) und d der Abstand zwischen dem Egofahrzeug (12) in dem vorausliegenden Fahrzeug (13) ist.

4. Verfahren nach Anspruch 1,
wobei sich die zweite Soll-Verzögerung ($D_{req,stop}$) auf ein Kollisionsszenario zwischen dem Egofahrzeug (12) und einem stillstehenden vorausliegenden Fahrzeug (13) bezieht.

5. Verfahren nach einem der vorangehenden Ansprüche,
wobei als zweite Soll-Verzögerung folgendes gewählt wird:

$$D_{\mathrm{req,stop}} = \frac{v_{\mathrm{sub}}^2}{2\left(d + \frac{v_{\mathrm{obs}}^2}{2D_{\mathrm{obs}}}\right)},$$

wobei $D_{req,stop}$ die einzustellende Soll-Verzögerung, $v_{sub}$ die Geschwindigkeit des Egofahrzeugs (12), $v_{obs}$ die Geschwindigkeit des vorausliegenden Fahrzeugs (13) und d der Abstand zwischen dem Egofahrzeug (12) in dem vorausliegenden Fahrzeug (13) ist.

6. Anordnung (10) zum Festlegen einer Soll-Verzögerung für ein Egofahrzeug (12), wobei die Anordnung (12) aufweist:

- eine Bewegungsgrößenermittlungseinrichtung (14), die dazu eingerichtet ist, wenigstens eine Bewegungsgröße des vorausliegenden Fahrzeugs (13) zu ermitteln;
- eine Soll-Verzögerungs-Festlegeeinrichtung (16), die dazu eingerichtet ist, folgendes zu ermitteln:

- eine Bremszeit (Object_Time_to Stillstand) und eine Bremsdistanz (Object_Distance_to Stillstand) basierend auf der Bewegungsgröße, die das vorausliegende Fahrzeug (13) jeweils benötigen würde, um zum Stillstand zu kommen; und

- eine Bremszeit (Ego_Time_to Stillstand) für das Egofahrzeug (12), die benötigt werden würde, um an spätestens derselben Position zum Stillstand zu kommen wie das vorausliegende Fahrzeug (13), wenn dieses die Bremsdistanz (Object_Distance_to Stillstand) zurückgelegt hat;

wobei die Soll-Verzögerungs-Festlegeeinrichtung (16) ferner dazu eingerichtet ist, ein Verhältnis der Bremszeiten des vorausliegenden Fahrzeugs (13) und des Egofahrzeugs (12) zu ermitteln und darauf basierend eine Soll-Verzögerung für das Egofahrzeug (12) festzulegen,

wobei dann, wenn die Bremszeit (Object_Time_to Stillstand) des vorausliegenden Fahrzeugs (13) größer als diejenige des Egofahrzeugs (12) ist, eine erste Soll-Verzögerung ($D_{req,D}$) festgelegt wird, und
wobei dann, wenn die Bremszeit (Ego_Time_to Stillstand) des vorausliegenden Fahrzeugs (13) kleiner als diejenige des Egofahrzeugs (12) ist, eine zweite Soll-Verzögerung ($D_{req,stop}$) festgelegt wird.

**7.** Fahrzeug (12), umfassend eine Anordnung nach Anspruch 6.

**Claims**

**1.** Method for defining a target deceleration for an ego vehicle (12), wherein the method comprises:

- determining at least one motional variable of a vehicle ahead (13);
- determining a braking time (Object_Time_to Stillstand) and a braking distance (Object_Distance_to Stillstand) based on the motional variable which the vehicle ahead (13) would respectively need in order to come to a standstill;
- determining for the ego vehicle (12) a braking time (Ego_Time_to Stillstand) that would be needed in order to come to a standstill at the latest at the same position as the vehicle ahead (13) when the latter has travelled the braking distance (Object_Distance_to Stillstand);
- determining a relationship of the braking times (Object_Time_to Stillstand, Ego_Time_to Stillstand) of the vehicle ahead (13) and the ego vehicle (12);
- defining a target deceleration ($D_{req,stop}$) for the ego vehicle (12) based on the determined relationship of the braking times (Object_Time_to Stillstand, Ego_Time_to Stillstand);

wherein, when the braking time (Object_Time _to Stillstand) of the vehicle ahead (13) is greater than that of the ego vehicle (12), a first target deceleration ($D_{req,D}$) is selected, and
wherein, when the braking time (Ego_Time_to Stillstand) of the vehicle ahead (13) is smaller than that of the ego vehicle (12), a second target deceleration ($D_{req,stop}$) is selected.

**2.** Method according to Claim 1,
wherein the first target deceleration ($D_{req,D}$) relates to a collision scenario between the ego vehicle (12) and a still moving vehicle ahead (13).

**3.** Method according to Claim 1 or 2,
wherein the following is selected as the first target deceleration:

$$D_{\mathrm{req,D}} = D_{\mathrm{obs}} + \frac{v_{\mathrm{diff}}^2}{2d}\quad,$$

where $D_{req,D}$ is the target deceleration to be set, $D_{obs}$ is the absolute deceleration of the vehicle ahead (13), $v_{diff}$ is the difference in speed between the ego vehicle (12) and the vehicle ahead (13) and d is the distance between the ego vehicle (12) in the vehicle ahead (13).

**4.** Method according to Claim 1,
wherein the second target deceleration ($D_{req,stop}$) relates to a collision scenario between the ego vehicle (12) and a stationary vehicle ahead (13).

**5.** Method according to one of the preceding claims, wherein the following is selected as the second target deceleration:

$$D_{\text{req,stop}} = \frac{v_{\text{sub}}^2}{2\left(d + \frac{v_{\text{obs}}^2}{2D_{\text{obs}}}\right)},$$

where $D_{\text{req,stop}}$ is the target deceleration to be set, $v_{\text{sub}}$ is the speed of the ego vehicle (12), $v_{\text{obs}}$ is the speed of the vehicle ahead (13) and d is the distance between the ego vehicle (12) in the vehicle ahead (13).

**6.** Apparatus (10) for defining a target deceleration for an ego vehicle (12), wherein the apparatus (12) comprises:

- a motional variable determination device (14) adapted to determine at least one motional variable of the vehicle ahead (13);
- a target deceleration definition device (16) adapted to determine the following:

- a braking time (Object_Time_to Stillstand) and a braking distance (Object_Distance_to Stillstand) based on the motional variable which the vehicle ahead (13) would respectively need in order to come to a standstill;
- a braking time (Ego_Time_to Stillstand) for the ego vehicle (12) that would be needed in order to come to a standstill at the latest at the same position as the vehicle ahead (13) when the latter has travelled the braking distance (Object_Distance_to Stillstand);

wherein the target deceleration definition device (16) is further adapted to determine a relationship of the braking times of the vehicle ahead (13) and the ego vehicle (12) and based thereon to define a target deceleration for the ego vehicle (12),

wherein, when the braking time (Object_Time_to Stillstand) of the vehicle ahead (13) is greater than that of the ego vehicle (12), a first target deceleration ($D_{\text{req,D}}$) is defined, and

wherein, when the braking time (Ego_Time_to Stillstand) of the vehicle ahead (13) is smaller than that of the ego vehicle (12), a second target deceleration ($D_{\text{req,stop}}$) is defined.

**7.** Vehicle (12),
comprising an apparatus according to Claim 6.

**Revendications**

**1.** Procédé de détermination d'une décélération cible d'un véhicule EGO (12), le procédé comprenant les étapes suivantes :

- déterminer au moins une grandeur de déplacement d'un véhicule (13) situé devant ;
- déterminer un temps de freinage (Object_Time_to standstill) et une distance de freinage (Object_Distance_to standstill) sur la base de la grandeur de déplacement dont le véhicule (13) situé devant aurait besoin à chaque fois pour s'immobiliser ;
- déterminer un temps de freinage (Ego_Time_to standstill) dont le véhicule EGO (12) aurait besoin pour s'immobiliser au plus tard à la même position que le véhicule (13) situé devant si celui-ci a parcouru la distance de freinage (Object_Distance_to standstill) ;
- déterminer un rapport des temps de freinage (Object_Time_to Standstill, Ego_Time_to Standstill) du véhicule (13) situé devant et du véhicule EGO (12) ;
- spécifier une décélération cible ($D_{\text{req,stop}}$) du véhicule EGO (12) sur la base du rapport déterminé des temps de freinage (Object_Time_to standstill, Ego_Time_to standstill) ;

une première décélération cible ($D_{\text{req,D}}$) étant choisie uniquement si le temps de freinage (Object_Time_to standstill) du véhicule (13) situé devant est supérieur à celui du véhicule EGO (12), et
une deuxième décélération cible ($D_{\text{req,stop}}$) étant choisie uniquement si le temps de freinage (Ego_Time_to standstill) du véhicule (13) situé devant est inférieur à celui du véhicule EGO (12).

**2.** Procédé selon la revendication 1,
la première décélération cible (D<sub>req,D</sub>) concernant un scénario de collision entre le véhicule EGO (12) et un véhicule (13) situé devant qui roule encore.

**3.** Procédé selon la revendication 1 ou 2,
La formule suivante étant choisie comme première décélération cible :

$$D_{req,D} = D_{obs} + \frac{v_{diff}^2}{2d}$$

D<sub>req,D</sub> étant la décélération cible à régler, D<sub>obs</sub> étant la décélération absolue du véhicule (13) situé devant, v<sub>diff</sub> étant la vitesse différentielle entre le véhicule EGO (12) et le véhicule (13) situé devant et d étant la distance entre le véhicule EGO (12) et le véhicule (13) situé devant.

**4.** Procédé selon la revendication 1,
la deuxième décélération cible (D<sub>req,stop</sub>) concerne un scénario de collision entre le véhicule EGO (12) et un véhicule immobile (13) situé devant.

**5.** Procédé selon l'une des revendications précédentes, la formule suivante étant choisie comme deuxième décélération cible :

$$D_{req,stop} = \frac{v_{sub}^2}{2\left(d + \frac{v_{obs}^2}{2D_{obs}}\right)}$$

D<sub>req,stop</sub> étant la décélération cible à régler, v<sub>sub</sub> étant la vitesse du véhicule EGO (12), v<sub>obs</sub> étant la vitesse du véhicule (13) devant et d étant la distance entre le véhicule EGO (12) et le véhicule (13) situé devant.

**6.** Ensemble (10) destiné à déterminer une décélération cible d'un véhicule EGO (12), l'ensemble (12) comportant :

- un dispositif de détermination de grandeur de déplacement (14) qui est conçu pour déterminer au moins une grandeur de déplacement du véhicule (13) situé devant ;
- un dispositif de détermination de décélération cible (16) qui est conçu pour déterminer :
- un temps de freinage (Object_Time_to standstill) et une distance de freinage (Object_Distance_to standstill) sur la base de grandeur de déplacement dont le véhicule (13) situé devant aurait besoin à chaque fois pour s'immobiliser ; et
- un temps de freinage (Ego_Time_to standstill) dont le véhicule EGO (12) aurait besoin pour s'immobiliser au plus tard à la même position que le véhicule (13) situé devant si celui-ci a parcouru la distance de freinage (Object_Distance_to standstill) ;

le dispositif de détermination de décélération cible (16) étant en outre conçu pour déterminer un rapport des temps de freinage du véhicule (13) situé devant et du véhicule EGO (12) et pour spécifier sur la base dudit rapport une décélération cible du véhicule EGO (12),

une première décélération cible (D<sub>req,D</sub>) étant spécifiée uniquement si le temps de freinage (Object_Time_to standstill) du véhicule (13) situé devant est supérieur à celui du véhicule GO (12), et
une deuxième décélération cible (D<sub>req,stop</sub>) étant spécifiée uniquement si le temps de freinage (Ego_Time_to standstill) du véhicule (13) situé devant est inférieur à celui du véhicule EGO (12).

**7.** Véhicule (12) comprenant un ensemble selon la revendication 6.

FIG. 1

FIG. 2

FIG. 3

FIG. 4

Stand der Technik

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102012002695 A1
- DE 60116801 T2
- DE 102006034411 A1
- DE 102004004918 A1